# EUROPEAN PATENT APPLICATION

(11) **EP 4 841 521 A1**
(43) Date of publication of application: **18.11.2026**
(21) Application number: 26178156.1
(22) Date of filing: 12.05.2026
(51) Int. Cl.: G06N 10/20, G06N 10/80

(54) **SIMULATION AND/OR COMPILATION OF QUANTUM COMPUTING CIRCUITS**

(30) Priority: 16.05.2025 DE 102025119066
(71) Applicant: Deutsches Zentrum für Luft- und Raumfahrt e.V., 53227 Bonn-Oberkassel (DE)
(72) Inventor: da Costa, David, 51147 Köln (DE)
(74) Representative: Günther, Constantin

(57) **Abstract**

The invention is related to a method for simulating and/or compiling a quantum computing circuit comprising at least one qubit, wherein the simulating and/or compiling is done by algebraic calculation steps executed on a computer with a conventional architecture which simulates the behavior of real qubits. The invention is further related to a computer program for simulating and/or compiling a quantum computing circuit and a computer for executing such computer program.

## Description

The invention is related to a method for simulating and/or compiling a quantum computing circuit comprising at least one qubit, wherein the simulating and/or compiling is done by algebraic calculation steps executed on a computer with a conventional architecture which simulates the behavior of real qubits. The invention is further related to a computer program for simulating and/or compiling a quantum computing circuit and a computer for executing such computer program.

It is an object of the present invention to improve the simulation and/or compilation of a quantum computing circuit based on today available computers having a conventional architecture, in particular standard computers without quantum computing properties.

The object of the invention is achieved by the method of claim 1, the computer program of claim 7 and the computer of claim 8. In particular, a standard computer with a conventional architecture, e.g. a Von-Neumann and/or Harvard architecture, can be used for implementing the invention. The inventions is suitable for simulating and/or compiling a quantum computing circuit comprising a plurality of qubits (multiqubit applications).

As opposed to the state of the art (use of fermionic properties to represent quantum circuits), in the invention it is proposed to use hard-core-bosonic properties for the simulation and/or compilation of a quantum computing circuit. As an alternative to complex Clifford algebra, the method of the invention may use a mixed algebra based on hard-core bosons, where elements within the same indices anticommute and elements within the different indices commute

Simulating quantum systems without the exponential overhead characteristic of classical simulations is a challenging task. Complex Clifford algebras can unify all components of a quantum circuit, with only elements of the algebra together with the geometric product. However, due to its non-Abelian nature, the geometric product realizes the tensor product by constantly correcting the sign of the expressions. In this work, hard-core bosons are shown as the most natural way to fully represent multiqubit systems and the tensor product is naturally realized without the need of any sign correction. It is proved that the two approaches are strictly equivalent up to a Jordan-Wigner transformation. Multiqubit gates in terms of annihilation and creation operators are described. Finally, a method to simulate a quantum circuit is developed.

### 1 INTRODUCTION

During the last decades, quantum computing, as proposed initially by Feynman [1] (for older works connecting quantum mechanics with computation see Refs. [2, 3]) and later formalized by Deutsch [4], has emerged as a new, both theoretical and experimental, multidisciplinary field of science. It comprises many aspects of computer science, physics, and mathematics that utilizes quantum mechanics with the aim to solve com-plex problems faster than on classical computers. Quantum computers could lead to computational tasks be executed exponentially faster on a quantum processor than on a classical processor [1] - often referred as quantum supremacy [5]. A comprehensive recent review is available in Ref. [6]. Although, the modern quantum computation has reached the noisy intermediate-scale quantum (NISQ) era [7], one is still at early stages for transiting to a fault-tolerant era, which is essential to enable quantum advantage.

In the standard approach of quantum computation, the basic unit is the qubit, the analogue of the classical bit. It is defined by the vector state $\left|ψ\right〉 = α \left|0\right〉 + β \left|1\right〉 ,$ (1) built upon an orthonormal basis states {|0〉, |1〉} of the two-dimensional complex Hilbert space, C². The complex coefficients *α*, *β* are just restricted to the relation |α|² +|β|² = 1, so that |ψ〉 remains normalized to 1. A multiqubit system is then defined by taking the tensor product of replicas of the complex Hilbert space C². A quantum computer made of *n* qubits corresponds to a complex Hilbert space of dimension 2ⁿ. Unitary operators, which transform multiqubit states into other multiqubit states, serve as the quantum analogues of classical logic gates, such as AND, OR, NOT, and NAND. Diagrammatically, quantum algorithms are constructed by applying a sequence of gates (unitary operators) to wires (qubits) in a specific order, analogous to the circuit model in classical computing. It has been demonstrated that any unitary quantum operation can be decomposed into a combination of single-qubit gates and two-qubit gates [8].

In comparison to classical circuits, quantum algorithms involve unique features of quantum mechanics, such as superposition and entanglement, which have no classical equivalent. And therefore, when evaluating a quantum algorithm or quantum circuit, one may consider how it could be simulated using only classical computation. It is clear that this task becomes challenging due to the exponential growth of the state space when the number of qubits increases. However, it has been proved a class of quantum circuits, involving Clifford gates [9], can be efficiently simulated classically [10]. A review of various approaches to the quest of simulating classically quantum computations is found in Ref. [11]. Another approach instead of fully simulate a quantum circuit involves the use of classical computation for pre- and/or post-processing steps [12].

An important aspect of quantum computer simulation is the classical model for representing a quantum circuit. In the literature, there exists circuit representations based on algebraic expressions [13, 14, 15]. In particular, complex Clifford Algebras have been proposed for representing qubits and quantum gates through the geometric product [13], which for any two elements u and v of the algebra has the following form $uv = u ⋅ v + u ∧ v ,$ (2) where the product · stands for scalar product, while the external product ∧ is antisymmetric. As shown in Ref. [13], elements of the Witt basis, definable in finite-dimensional complex Clifford algebras, are used to define the state vectors necessary to algebraically represent all the qubits of a given quantum computer. The Witt basis is characterized by elements *fᵢ* and *fᵢ*^{†}, which fulfill the following anticommutation relations (for details see Ref. [16]), $\left\{{f}_{i}, {f}_{j}\right\} = \left\{{f}_{i}^{†}, {f}_{j}^{†}\right\} = 0 , \left\{{f}_{i}, {f}_{j}^{†}\right\} = δij .$ (3)

Note that the product on the above equation is just the geometric product of the complex Clifford algebra. It is noteworthy that, the algebra elements *fᵢ* and *fⱼ^{†}* behave like the fermionic annihilation and creation operators in physics. In the simplest complex Clifford algebra, where only a pair of f, *f^{t}* exists, the state vector | 0〉 and | 1〉 may be defined as $\left|0\right〉 : = {ff}^{†} , \left|1\right〉 : = {f}^{†} \left|0\right〉 = {f}^{†} ,$ among many other choices. A qubit is then just given by (1). The scalar product of different qubit states is defined within the algebra as $\left〈a\left|b\right.\right〉 = \frac{1}{2} {\left(ab\right)}_{0}$, where the notation (a)₀ denotes the projection to the scalar (grad zero) part of the algebra element a. In Ref. [13], it is also shown that any unitary transformation acting on a qubit can be expressed in terms of these operators. For example, if one considers the quantum equivalent of the NOT gate, which is the Pauli matrix *X*, the quantum gate *X* is then represented as $X = f + {f}^{†} .$

Remarkably, within this framework [13], the geometric product is used not only to realize the product among unitary operators, but also to represent the application of a gate to a qubit state.

The generalization to multiqubit states is straightforward, namely, one defines the state | 00 ··· 0〉 as $\left|00⋯0\right〉 : = {\left|0\right〉}_{1} ⊗ {\left|0\right〉}_{2} ⊗ ⋯ ⊗ {\left|0\right〉}_{n} = {\prod }_{i = 1}^{n} {f}_{i} {f}_{i}^{†} .$

One sees that the tensor product is also realized through the geometric product. In general, for any *λᵢ* ∈ {*fᵢ*, *fᵢ*^{†}, *fᵢfᵢ*^{†}, *fᵢ*^{†}*fᵢ*} the tensor product corresponds to ${λ}_{1} ⊗ ⋯ ⊗ {λ}_{n} \to {\left(-1\right)}^{p} {λ}_{1} ⋯ {λ}_{n} ,$ (4) where *p* is the sum of all cardinals of the sets *Sᵢ* = {*j* < *i*: *λⱼ = fⱼ or λⱼ* = *fⱼ*^{†}*fⱼ*} in the case if λᵢ = fᵢ or λₗ = fᵢ^{†}. This intricate formula arises from the fact that the order of each operator in the tensor product of operators acting on its respective subspace is commutative, whereas this is not true for the geometric product given in (2). Nonetheless, this complex Clifford algebra approach provides an elegant and unifying framework to represent a quantum circuit as a whole, and numerical computations have been carried out [17, 18]. In fact, the anticommutation relations given in (3) are remarkably powerful, as they are sufficient for performing calculations without the explicit determination of matrix elements - the so-called oscillator expansion technique. This characteristic is precisely what makes annihilation and creation opera-tors so fundamental in quantum mechanics [19] and other areas of science [20, 21]. An example, where the the oscillator expansion technique relation were applied for computational algebraic simplifications can be found in Ref. [22].

The goal of the present paper is to show that the algebra of hard-core bosons provides an alternative way for representing qubits and quantum gates in a general quantum circuit. In contrast to the complex Clifford algebra construction [13], the hard-core boson algebra allows the realization of the tensor product of opera-tors to be naturally commutative, which simplifies the determination of the parity factor (-1)^{p} in (4). Once the hard-core boson algebra is delineated, the process of simulation is then explored.

The next sections of this paper are organized as follow. In the next section, one construct the hard-core boson algebra in the context of qubits. The design of quantum circuits is then introduced. In the Section 3 the representation of quantum gates based on products and sums of hard-core boson operators is established. Some applications are presented at Section 4. Finally, conclusions are drawn in Section 5.

### 2 THE ALGEBRA OF HARD-CORE BOSONS

In this section the algebra of the hard-core bosons and its application to represent quantum circuits are introduced. Hard-core bosons appeared motivated in many problems of condense matter physics. A few examples of application can be seen in [23, 24]. The purpose of this section is to show that they appear as a natural description of the qubit system.

As mentioned in the introduction, qubits are defined as the tensor product of multiple replicas of a two-dimensional quantum system, namely C². A single qubit is a linear combination of the orthonormal basis {|0〉, |1〉}. One assumes that these two states are eigenstates of some observable, with corresponding eigen-values being non-degenerate (distinguishable). This is usually denoted as the computational basis. Since the set {|0〉, |1〉} is a basis, any linear operator acting on vector states in C² can be fully decomposed in terms of four operators, namely, |0〉 〈0|, |1〉 〈1|, |0〉 〈1| and |1〉 〈0|. The first two operators from the just mentioned list are the usual basis projectors, which sum gives the identity, as, $\left|0\right〉 \left〈0\right| + \left|1\right〉 \left〈1\right| = 1 ,$ while the remaining two operators are the so-called, the annihilation, *a*, and the creation, *a^{†}*, operators, respectively, $a : = \left|0\right〉 \left〈1\right| , {a}^{†} : = \left|1\right〉 \left〈0\right| .$ (5)

Their names arise from the following properties: $a \left|0\right〉 = 0 , a \left|1\right〉 = \left|0\right〉 , {a}^{†} \left|0\right〉 = \left|1\right〉 , {a}^{†} \left|1\right〉 = 0 .$

The projectors |0〉 〈0| and |1〉 〈1| can be written as products of annihilation and creation operators, as ${aa}^{†} = \left|0\right〉 \left〈0\right| , {a}^{†} a = \left|1\right〉 \left〈1\right| .$ (6)

**Table 1: Closure of the operator composition law for the elements in {1, 0, a, a^{†}, aa^{†}, a^{†}a} (monoid).**

| · | 0 | 1 | *a* | *a*^{†} | *aa*^{†} | *a*^{†}*a* |
|---|---|---|---|---|---|---|
| 0 | 0 | 0 | 0 | 0 | 0 | 0 |
| 1 | 0 | 1 | *a* | *a*^{†} | *aa*^{†} | *a*^{†}*a* |
| *a* | 0 | *a* | 0 | *aa*^{†} | 0 | *a* |
| *a*^{†} | 0 | *a*^{†} | *a*^{†}*a* | 0 | *a*^{†} | 0 |
| *aa*^{†} | 0 | *aa*^{†} | *a* | 0 | *aa*^{†} | 0 |
| *a*^{†}*a* | 0 | *a*^{†}*a* | 0 | *a*^{†} | 0 | *a*^{†}*a* |

The combination *N* := *a*^{†}*a* is usually called the number operator and together with *M := aa*^{†}, they satisfies: $N + M = 1 , NM = MN = 0 .$

The matrix representations of the operators *N*, M are idempotent Hermitian matrices with trace 1.

Taking into account the equations given in (5) and (6), one concludes that for any linear operator O it can be entirely described in terms of annihilation and creation operators, $O = {O}_{00} {aa}^{†} + {O}_{01} a + {O}_{10} {a}^{†} + {O}_{11} {a}^{†} a .$ (7) with *Oᵢⱼ* := 〈*i*|*O*|*j*〉. Directly from equations given in (5) and (6), one writes a closed relation between the annihilation and creation operators as $\left\{a, {a}^{†}\right\} = 1 , {a}^{2} = {\left({a}^{†}\right)}^{2} = 0 .$ (8)

These operator properties form a noncommutative algebra, being 1 the identity element. This algebra is usually called Grassmann algebra by physicists. One sees in Table 1, that any product of annihilation and creation operators always leads to one of the elements of the set {1, 0, a, *a*^{†}, *aa*^{†}, *a*^{†}*a*}.

In a multiqubit system of dimension 2*ⁿ* one represents the basis states {|*b*〉}, with *b* = 0,..., 2*ⁿ* -1 as tensor product of the two state quantum system |0〉 and |1〉 as $\left|b\right〉 ≡ \left|{b}_{1}{b}_{2}⋯{b}_{n}\right〉 = \left|{b}_{1}\right〉 ⊗ \left|{b}_{2}\right〉 ⋯ ⊗ \left|{b}_{n}\right〉 ,$ where the elements *bᵢ* are the bits in the binary basis of the integer b (the bit on the far right *bₙ* is the least significant bit), and therefore *bᵢ* ∈ {0, 1}. In the context of multiqubit vector space, it is natural to extend the definition of the annihilation and creation operators by the following definitions ${a}_{i} : = 1 ⊗ ⋯ ⊗ 1 ⊗ a ⊗ 1 ⊗ ⋯ ⊗ 1 ,$ ${{a}^{†}}_{i} : = 1 ⊗ ⋯ ⊗ 1 ⊗ {a}^{†} ⊗ 1 ⊗ ⋯ ⊗ 1 ,$ where in the above equations each annihilation or creation is set at the position *i* in the tensor product string, while the other position are set to the identity. One can now deduce the algebra for the extended annihilation, *ai*, and creation, *a*^{†}*ᵢ*, operators. Setting *i* =/ *j*, one has $\left[{a}_{i}, {a}_{j}\right] = \left[{{a}^{†}}_{i}, {{a}^{†}}_{j}\right] = \left[{a}_{i}, {{a}^{†}}_{j}\right] = 0 .$ (9)

These relations above are typical of bosonic commutation relations. It means, when one multiplies operators from different qubit index, they commute and therefore the commutativity of tensor product of operators is preserved. This is a neat difference when comparing with (4) given in Section 1. The relation of annihilation and creation operators within the same qubit index, i.e., *i = j*, is instead given by anticommutation relations, $\left\{{a}_{i}, {{a}^{†}}_{l}\right\} = 1 , \left\{{a}_{i}, {a}_{i}\right\} = \left\{{{a}^{†}}_{i}, {{a}^{†}}_{l}\right\} = 0 ,$ (10) exhibiting now a fermion-like behavior. This mixed behavior, or this inconsistency of the qubits with the properties of either bosons or fermions, is what is called in the literature as hard-core bosons and their algebra is fully determined by (9) and (10). The hard-core bosons are similar to the parafermions if one restricts oneself to qubit systems [25, 26].

The full basis of the multiqubit space can now be systematically enumerated. In what follows, one denotes the vacuum state vector |**0**〉 := |00 · · ·0〉. The transformation of the annihilation and creation operators when acting on the computational basis vectors is straightforward (in expressions like |*b*1 ···*x*···*bₙ*〉 it is assumed that x is at the position *i*): ${a}_{i} \left|\left.{b}_{1}⋯0⋯{b}_{n}\right〉=0,{{a}_{i}}^{†}\right| \left.\left.{b}_{1}⋯0⋯{b}_{n}\right〉=\right| \left.{b}_{1}⋯1⋯{b}_{n}\right〉 ,$ ${{a}_{i}}^{†} \left|\left.{b}_{1}⋯1⋯{b}_{n}\right〉=0,{a}_{i}\right| \left.\left.{b}_{1}⋯1⋯{b}_{n}\right〉=\right| \left.{b}_{1}⋯0⋯{b}_{n}\right〉 ,$

Therefore any state vector |*b*₁*b*₂···*bₙ*〉 is written as $\left|{b}_{1}{b}_{2}⋯{b}_{n}\right〉 = {\left({{a}_{i}}^{†}\right)}^{b 1} {\left({{a}_{2}}^{†}\right)}^{{b}_{2 …}} {\left({{a}_{n}}^{†}\right)}^{bn} \left|0\right〉 .$ (11)

Again, here *bᵢ* stands for the value of the bit at position *i*. One can easily verify that such state vectors are orthogonal and properly normalized, i.e., $\left〈b{′}_{1}b{′}_{2}⋯b{′}_{n}\left|{b}_{1}{b}_{2}⋯{b}_{n}\right.\right〉 = {δ}_{{b}_{1} b {′}_{1}} {δ}_{{b}_{2} b {′}_{2}} ⋯ {δ}_{{b}_{n} b {′}_{n}} .$

For computations, it is useful to rewrite the equation given in (11) without introducing powers, as follows $\left|{b}_{1}{b}_{2}⋯{b}_{n}\right〉 = \left[{b}_{1}{{a}^{†}}_{1}+\left(1-{b}_{1}\right)1\right] \left[{b}_{2}{{a}^{†}}_{2}+\left(1-{b}_{2}\right)1\right] ⋯ \left[{b}_{n}{{a}^{†}}_{n}+\left(1-{b}_{n}\right)1\right] \left|0\right〉 .$ (12)

This derivation demonstrates that a hard-core boson structure naturally emerges from a multiqubit space, with the advantageous property of preserving tensor product commutativity. Since there is no need to correct the tensor parity, as required in (4), this implementation appears more efficient for constructing a simulator. However, for a large number of qubits, the exponential growth of the multiqubit space presents significant challenges for simulation.

Since between different indices all operators commute, the product of an arbitrary number of operators can be performed by associating operators with same indices together, maintaining their relative position. Further simplification can be performed by using Table 1. As an example, one has ${a}_{5} {{a}^{†}}_{2} {a}_{1} {a}_{2} {{a}^{†}}_{3} {{a}^{†}}_{2} = {a}_{1} {{a}^{†}}_{2} {a}_{2} {{a}^{†}}_{2} {{a}^{†}}_{3} {a}_{5} = {a}_{1} {a}_{2} {{a}^{†}}_{3} {a}_{5} .$

In order to compare two different expressions, one needs an ordering, which for example, one takes first the qubit index and then the creation operator before the annihilation operator (same index) ${a}_{5} {a}_{1} {a}_{2} {{a}^{†}}_{3} {{a}^{†}}_{2} = {a}_{1} {{a}^{†}}_{3} {a}_{5} - {a}_{1} {{a}^{†}}_{2} {a}_{2} {{a}^{†}}_{3} {a}^{5} .$

Before concluding this section, one shows the equivalence or the relation of hard-core boson algebra to two well established frameworks, namely, the complex Clifford algebra and the Pauli strings.

### Complex Clifford Algebras

One addresses now the question whether it is possible to map the hard-core boson algebra to the fermionic-like formulation in the context of complex Clifford algebras [13]. In fact, there is a well-known mapping between hard-core bosons and fermions, the so-called Jordan-Wigner transformation [27], in which the annihilation and creation operators are transformed as ${a}_{i} \to {f}_{i} = {J}_{i} {a}_{i} and {a}_{i}^{†} \to {f}_{i}^{†} = {J}_{i}^{†} {a}_{i}^{†} ,$ where Ji is an unitary operator defined by ${J}_{i} : = {\prod }_{k = 1}^{i - 1} {e}^{{iπa}_{k}^{†} {a}_{k}} .$

From the definition, one deduces the following relation ${J}_{i}^{†} = {J}_{i} = {\prod }_{k = 1}^{i - 1} \left(-{Z}_{k}\right) ,$ and if one takes into account that *Zᵢ* anticommutes with *aᵢ* and *a*^{†}*ᵢ*, it can then demonstrated that the resulted operators *fᵢ* and *fᵢ*^{†} fulfill the fermionic algebra given in (3), i.e., $\left\{{f}_{i}, {f}_{j}^{†}\right\} = {δ}_{ij} 1 , \left\{{f}_{i}, {f}_{j}\right\} = \left\{{f}_{i}^{†}, {f}_{j}^{†}\right\} = 0 .$

The Jordan-Wigner transformations are know to be an elegant and systematic way to include fermionic properties into quantum computations [15].

### Pauli Strings

One establishes first the map between the annihilation and creation operators and the *X*- and *Y*-Pauli matrices. ${X}_{i} = {a}_{i} + {a}_{i}^{†} , {Y}_{i} = i \left({a}_{i}^{†}-{a}_{i}\right) ,$ (13) with the converse being given by ${a}_{i} = \frac{{X}_{i} + {iY}_{i}}{2} , {a}_{i}^{†} = \frac{{X}_{i} - {iY}_{i}}{2} .$

The Z-Pauli matrices are given by *Zᵢ* := *iXᵢYᵢ* and one has ${Z}_{i} = {a}_{i}^{†} {a}_{i} - {a}_{i} {a}_{i}^{†} = {M}_{i} - {N}_{i} .$

There is a straightforward relation between *Zᵢ* and the number operator *Nᵢ* and the operator *Mᵢ*, as ${N}_{i} = \frac{1 - {Z}_{i}}{2} , {M}_{i} = \frac{1 + {Z}_{i}}{2} .$

As an example, for any 2-dimensional linear operator, *O*, the expression given in (7) can be rewritten as linear combination of Pauli matrices *X,Y,Z*, and the identity matrix 1, as $O = \frac{1}{2} \left[\left({O}_{00}+{O}_{11}\right)1+\left({O}_{10}+{O}_{01}\right)X+i\left({O}_{10}-{O}_{01}\right)Y+\left({O}_{00}-{O}_{11}\right)Z\right] .$

Since the products of annihilation and creation operators are nothing more than a tensor product, it is not surprising that the definitions given in (13) for *i* ≠ *j* lead to $\left[{X}_{i}, {X}_{j}\right] = \left[{Y}_{i}, {Y}_{j}\right] = \left[{Z}_{i}, {Z}_{j}\right] = \left[{X}_{i}, {Y}_{j}\right] = \left[{X}_{i}, {Z}_{j}\right] = \left[{X}_{i}, {Z}_{j}\right] = 0 .$ which leads to the formalism of Pauli strings used extensively in quantum computation [28]. Pauli strings allows for a structured simulation process using classical computations [14].

### 3 QUANTUM CIRCUITS

**Table 2: The 1-qubit quantum gates written in terms of creation and annihilation operators. Note that in the table qubit indices were dropped for sake of simplification.**

| **Quantum Circuits** | **Operator Sequences** |
|---|---|
| 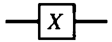 | *a*^{†} + *a* |
| 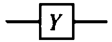 | *i*(*a*^{†} - *a*) |
| 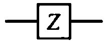 | *aa*^{†} - *a*^{†}*a* |
| 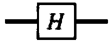 | $\frac{1}{\sqrt{2}} \left({aa}^{†}-{a}^{†}a+{a}^{†}+a\right)$ |
| 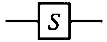 | *aa*^{†} *+ ia*^{†}*a* |
| 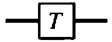 | ${aa}^{†} + {e}^{i \frac{π}{4}} {a}^{†} a$ |
| 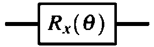 | $cos \left(\frac{θ}{2}\right) \left({aa}^{†}+{a}^{†}a\right) + i sin \left(\frac{θ}{2}\right) \left(a+{a}^{†}\right)$ |
| 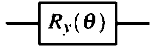 | $cos \left(\frac{θ}{2}\right) \left({aa}^{†}+{a}^{†}a\right) + sin \left(\frac{θ}{2}\right) \left(a-{a}^{†}\right)$ |
| 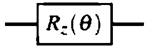 | ${e}^{i \frac{θ}{2}} {aa}^{†} + {e}^{- i \frac{θ}{2}} {a}^{†} a$ |

From the previous section, one can derive from (7) any 1-qubit gate, since it is an unitary operator. In Table 2 an example of 1-qubit gates are listed. In the case of multiqubit gates, an extension of (7) can easily be done. In the multiqubit space 2ⁿ-dimensional, an unitary operator acting on the space can be interpreted as $U = {\sum }_{b , b ′ = 0}^{{2}^{n} - 1} {U}_{bb ′} \left|b\right〉 \left〈b′\right| ,$ each operator |b〉 〈b^{'}| can then be written as $\left|b\right〉 \left〈b′\right| = \left|{b}_{1}⋯{b}_{n}\right〉 \left〈{b}_{1}^{′}⋯{b}_{n}^{′}\right| = \left|{b}_{1}\right〉 \left〈{b}_{1}^{′}\right| ⊗ ⋯ ⊗ \left|{b}_{n}\right〉 \left〈{b}_{n}^{′}\right| .$

Then, for each |b₁〉 〈b'₁| one has from (5) and (6) the following identification: $\left|0\right〉 \left〈0\right| = {a}_{i} {a}_{i}^{†} , \left|0\right〉 \left〈1\right| = {a}_{i} , \left|1\right〉 \left〈0\right| = {a}_{i}^{†} , \left|1\right〉 \left〈1\right| = {a}_{i}^{†} {a}_{i} .$

As illustration, if ones take a general control gate, Λ¹(*U*) = |0〉 〈0| ⊗ 1 + |1〉 〈1| ⊗U, between the first and second qubit, one gets written in terms of annihilation and creation operators as ${Λ}^{1} \left(U\right) = {a}_{1} {a}_{1}^{†} + {a}_{1}^{†} {a}_{1} \left({U}_{11}{a}_{2}{a}_{2}^{†}+{U}_{12}{a}_{2}+{U}_{21}{a}_{2}^{†}+{U}_{22}{a}_{2}^{†}{a}_{2}\right) ,$ where U is an unitary operator acting on C². The Table 3 shows examples of two-qubit gates written with only terms involving annihilation and creation operators.

In what follows, one demonstrates the powerful technique of using annihilation and creation operators to simulate probabilities for a given circuit. As in standard quantum machines, one begins with the state of the computation by assuming the system is initially set to the vacuum state |**0**〉. This is not a restriction,

**Table 3: The 2-qubit quantum gates written with creation and annihilation operators.**

| **Quantum Circuits** | **Operator Sequences** |
|---|---|
| 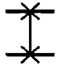 | ${a}_{1} {a}_{1}^{†} {a}_{2} {a}_{2}^{†} + {a}_{1}^{†} {a}_{1} {a}_{2}^{†} {a}_{2} + {a}_{1}^{†} {a}_{2} + {a}_{1} {a}_{2}^{†}$ |
| 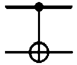 | ${a}_{1} {a}_{1}^{†} + {a}_{1}^{†} {a}_{1} \left({a}_{2}^{†}+{a}_{2}\right)$ |
| 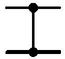 | ${a}_{1} {a}_{1}^{†} + {a}_{1}^{†} {a}_{1} \left({a}_{2}{a}_{2}^{†}+{a}_{2}^{†}{a}_{2}\right)$ |

since any initial state can be prepared and included at the beginning of the gate sequence. To make sense of the described hard-core boson formalism for simulating a given quantum circuit, some assumptions must be made. Thus, for a given sequence of gates *G := GₚGₚ₋₁* · · ·*G₁*, one assumes these gates to operate sequentially on the initial state |**0**〉, and at the end of the operation, the initial state evolves into a final state |*f*〉. It is also assumed that during the application of each gate *Gᵢ* to the resulting intermediate state, no measurements are performed. Only after the full sequence of gates is applied does the measurement process occur, marking the end of the computation. Finally, for sake of simplicity, it is assumed that the quantum simulation operates under ideal conditions, without considering any source of errors.

Within this algebraic framework, the effective resulting gate *G* is calculated by using the operations allowed by the hard-core boson algebra. The strength of this method is to calculate G without requiring the determination of any matrix elements for the operators involved, relying solely on the rules given in (9) and (10). The number of matrix elements grows exponentially as 2²ⁿ for *n* qubits and each gate, *Gᵢ*, action, on a qubit subset, would need to be represented in separated matrix blocks. However, within this method, no adjustments of this kind are required.

It is quite natural in quantum simulations to determine the final state vector just before the final measurement. In a real quantum computing device, the final measurement is the only means to extract information about the final state. The circuit must be applied repeatedly to obtain the probability distribution of the final state. Theoretically, the probability that the final state vector is in the state |*b₁b₂* · · ·*bₙ*〉 is given by $P \left(\left.b\right|G\right) : = P \left(\left.{b}_{1}{b}_{2}⋯{b}_{n}\right|{G}_{p}{G}_{p - 1}⋯{G}_{1}\right) = {\left|\left〈{b}_{1}{b}_{2}⋯{b}_{n}\left|G\right|0\right〉\right|}^{2} .$

Using the expression given in (12) in the bracket of the above equation, the probability *P(b,G)* becomes the expectation value of an algebraic expression (defined in the hard-core boson algebra) with respect to |**0**〉, as $P \left(b\left|G\right.\right) = {\left|\left〈0\right|\left[{b}_{1}{a}_{1}+\left(1-{b}_{1}\right)1\right]⋯\left[{b}_{n}{a}_{n}+\left(1-{b}_{n}\right)1\right]G\left|0\right〉\right|}^{2} .$ (14)

The algebraic rules given in (9) and (10) allow to move the creation operators to the left of the expression, and the annihilation operators to the right. Any term with an annihilation operator vanishes when applied to state |**0**〉 and any creation operator also vanishes when applied to the dual state 〈**0**|. The only terms that persist are terms proportional to the identity, due to the Kronecker tensor in the anticommutator relations given in (10). This demonstrates the potential of this algebraic technique for simulating quantum circuits.

It is worth to point out that one can simplify the scheme above with the aim to extract the probabilities without systematically preparing the dual state 〈*b₁b₂* · · ·*bₙ*|. Before the set of gates G acts on the state |**0**〉, one should order the operators in order to move all annihilation to the right. As in the previous case, the |**0**〉 will vanish all terms containing annihilation operators, resulting in the following equation $\left|f\right〉 : = {G}_{p} {G}_{p - 1} ⋯ {G}_{1} \left|0\right〉 = \left({\sum }_{b = 0}^{{2}^{n} - 1} {ζ}_{b} {\left({a}_{1}^{†}\right)}^{{b}_{1}} {\left({a}_{2}^{†}\right)}^{{b}_{2}} ⋯ {\left({a}_{n}^{†}\right)}^{{b}_{n}}\right) \left|0\right〉 ,$ (15) where ζ*_{b}* are just complex coefficients. For each b and its binary decomposition *b =* (*b*₁*, b*₂ ...*bₙ*), one can read the probability directly as $P \left(b\left|G\right.\right) = {\left|{ζ}_{b}\right|}^{2} .$

The operator inside of the parenthesis of the right-handed is no longer unitary, but it has the necessary information to reconstruct the probabilities. The resulting state is then given by $\left|f\right〉 = {\sum }_{b = 0}^{{2}^{n} - 1} {ζ}_{b} \left|{b}_{1}{b}_{2}…{b}_{n}\right〉 .$

In practical applications of the method of the invention, this may be used for reading out the state vector of the simulated quantum computing circuit during and/or after the simulation, and to make further evaluations based on the read out state vector data. Although such state vector is not possible to extract in a real quantum computer, it is a very useful tool provided by the method of the invention for helping to understand the complexity of the quantum algorithms and their composition.

### 4 APPLICATIONS

In what follows three examples are given to show the potential of the circuit representation and simulation in the context of hard-core bosons: preparation of the Greenberger-Horne-Zeilinger state through a quantum circuit, simulation a Grover algorithm and the question how to compare two given quantum circuits. Finally, computational developments for implementing this hard-core boson framework is reported.

### The Greenberger-Horne-Zeilinger state

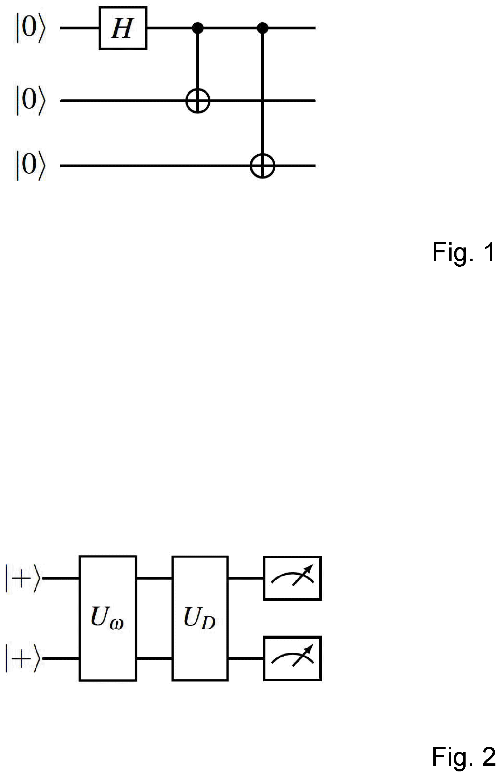

Figure 1 shows an exemplary embodiment of the Greenberger-Horne-Zeilinger state quantum circuit.

In this example, the Greenberger-Horne-Zeilinger (GHZ) state for 3 qubits is considered. In quantum information, the GHZ state is a certain type of entangled quantum state that involves at least three [29] or more qubits [30]. The 3-qubit GHZ state has been observed [31]. They play a crucial role in fundamental tests of quantum mechanics versus local realism and in many quantum information and quantum computation schemes [32]. In Figure 1, one shows a quantum circuit prepares the GHZ state.

Using the relation given in (15) for the circuit given in Figure 1, on gets ${G}_{GHZ} \left|0\right〉 = \left(\frac{1}{\sqrt{2}}1+\frac{1}{\sqrt{2}}{a}_{1}^{†}{a}_{2}^{†}{a}_{3}^{†}\right) \left|0\right〉 .$

As expected from Section 3, the right-handed side of the above equation is no longer a unitary operator acting on the state |**0**〉, but leads to the same final vector state, $\left|GHZ\right〉 = \frac{\left|000\right〉 + \left|111\right〉}{\sqrt{2}} .$

One reads from the GHZ state all nonvanishing probabilities, which are $P \left(000\left|{G}_{GHZ}\right.\right) = P \left(111\left|{G}_{GHZ}\right.\right) = \frac{1}{2}$ .

### Grover example

Figure 2 shows a quantum circuit for the Grover algorithm to find the solution |*ω*〉 = |10〉 marked by the oracle *U_{ω}*, followed by the action of the diffusor *U_{D}* (the reflection across the initial state). Note that since *n* = 2 qubits are used, the Grover iteration *U_{D}U_{ω}* is applied only once.

In this example, the hard-core boson formalism is applied to simulate a Grover algorithm [33]. The goal of the Grover algorithm is to find the solution state $\left|ω\right〉 ∈ {C}_{2}^{⊗ n}$ which is marked by the oracle *U*_{ω} via a phase flip, i.e., *Uω*|*ω*〉 = -|*ω*〉. To illustrate the hard-core boson formalism, the Grover algorithm is simulated on *n* = 2 qubits for |*ω*〉 = |10〉. The circuit is depicted in Figure 2 and the involved operations are ${U}_{ω} = 1 - 2 \left|ω\right〉 \left〈ω\right| = 1 - 2 {a}_{1}^{†} {a}_{1} {a}_{2} {a}_{2}^{†}$ ${U}_{D} = 2 \left|+\right〉 \left〈+\right| - 1 = \frac{1}{4} \left(1+{a}_{1}+{a}_{1}^{†}\right) \left(1+{a}_{2}+{a}_{2}^{†}\right) - 1 .$

The action of the circuit is $C : = {U}_{D} {U}_{ω} {H}^{⊗ 2} = {a}_{1} {a}_{2}^{†} {a}_{2} + {a}_{1}^{†} - {a}_{1}^{†} {a}_{2}^{†} {a}_{2} + {a}_{1}^{†} {a}_{1} {a}_{2} + {a}_{1}^{†} {a}_{1} {a}_{2}^{†} - {a}_{2} ,$ where the Hadamard state $\left|+\right〉 : = \left(\left|0\right〉+\left|1\right〉\right) / \sqrt{2}$ preparation was also included. From the procedure to deduce the final state in (15) in the Section 3, one gets *C*|**0**〉 = a^{†}₁|**0**〉, which lead to the outcome probability $P \left(2\left|C\right.\right) = {\left|\left〈0\right|{a}_{1}C\left|0\right〉\right|}^{2} = {\left|\left〈0\right|{a}_{1}{a}_{1}^{†}\left|0\right〉\right|}^{2} = 1 .$

As expected, the solution |*ω*〉 = |01〉 is correct with a prediction for the measurement of 100% of certainty.

### Circuit comparison

The methods described in this section can also be used to compare two distinct quantum circuits. Assuming all gates involved in the circuit are unitary, the two circuits, with respective final unitaries *G* and *G^{'}*, are equivalent if and only if ${\left|\left〈0\right|{G}^{†}G′\left|0\right〉\right|}^{2} = 1 .$

Similar to the procedure made on the equation given in (14), the ordering of creation operators to the left and annihilation operators to the right ensures that all terms vanish, except those proportional to the identity. This simplifies the evaluation of the bracket, making it calculable within the hard-core boson formalism.

### Computational implementation of hard-core bosons

In order to test the viability of the oscillator expansion techniques based on hard-core bosons for representing larger quantum circuits, a library written in C++ is being developed [34]. For performing the test, two benchmark circuits from the Munich Quantum Toolkit Benchmark Library (MQT Bench) [35] were chosen, namely, the quantum Fourier transformation algorithm (QFT) and the Grover's algorithm (v-chain). For both algorithms, the target-dependent native IBM gates *rz*, *sx*, *x* and *cx* were selected from the MQT Bench interface and delivered as OpenQASM 2.0 files [36]. The QFT circuit was generated for 5 qubits (composed of a total 71 gates), while the Grover's circuit was generated for 9 qubits (composed of a total of 3187 gates).

For this test, the statevector simulator of the Quantum Information Software Kit (Qiskit) [37] of version 1.4.2 was used as the reference for comparison of the performance of the two algorithms. Both Qiskit and Quipo tools tools were run in the chip Apple M1 (2020) with 16*GB* of RAM and under macOS Sequoia 15.3.2 (C++ compiler: Apple clang version 16.0.0). As a result, the QFT algorithm performed 0.0693*ms* on Quipo and 2.35*ms* on Qiskit, while the Grover's algorithm performed 55.7*ms* on Quipo and 98.6*ms* on Qiskit. The probabilities of the final state for each algorithm are identical for both Quipo and Qiskit. It was observed that the advantage of the Quipo over Qiskit depends strongly on the circuit topology. A more comprehensive benchmark analysis comparing Quipo with Qiskit and/or other statevector simulators is definitely needed.

### Implementation of hard-core boson algebra

For the implementation of the hard-core bosons it is important to find a fast codification. The Quipo library implements the creation and annihilation defined in the context of a hard-core boson algebra. In this library, two kinds of objects are defined, namely the product of operators, designated as q-monomials, and the arbitrary sums of products of operators, designates as q-polynomials. The q-polynomials are abstracted as a doubly linked list of q-monomials (e.g. in C++ would be the list or vector type a natural choice). For the q-monomials, the idea is to interprete the creation and annihilation operators as 3-bit value in an array of bits within an integer variable in the programming language, e.g. in C++. In what follows, one fixes the integer variable e.g. to 64-bit. As it will become soon clear, this identification does not depend on the number of bits of the integer variable. Thus, the bits of a 64-bit integer variable can be organized as follows $64 bit = \left|X\right| {{\left.XXX\right|}_{︸}}_{21} {{\left.XXX\right|}_{︸}}_{20} {{\left.XXX\right|}_{︸}}_{19} ⋯ {{\left|XXX\right|}_{︸}}_{3} {{\left.XXX\right|}_{︸}}_{2} {{\left.XXX\right|}_{︸}}_{1} ,$ where X represents an arbitrary bit (0 or 1). From the size of 64-bit integer one can codify up to 21-qubits. The remaining single bit is reserved to encode the null operator. This identification takes into account the fact that operators corresponding to different qubits commutes and, therefore, in a q-monomial the operators can be always aligned with the 3-bit value position on the given integer variable. Within a qubit, the operators of the algebra can be codified as: $1 \to 000 \left(0\right) , a \to 001 \left(1\right) , {a}^{†} \to 101 \left(5\right) , {aa}^{†} \to 011 \left(3\right) , {a}^{†} a \to 111 \left(7\right) .$

Within this choice a product of two q-monomials can be written in terms of the usual bitwise operations (A, V, ⊕, ¬, binary shifts « and »). Thus, giving two q-monomials with respective integer representation *x* and *y*, the product is then represented by the integer *z*, calculated by the following procedure. First, one calculates the discriminant Δ defined as $Δ = \left(\left({a}_{2}∧{b}_{2}∧{a}_{3}\right)∨\left(¬{a}_{2}∧¬{b}_{2}∧{a}_{3}\right)∨\left({a}_{2}∧¬{b}_{2}∧{b}_{3}\right)∨\left(¬{a}_{2}∧{b}_{2}∧{a}_{3}\right)\right) ,$ where the integers *xᵢ*, *yᵢ* are obtained by extracting the bit-i and shifting it *i -* 1 bits to the right, for each 3-bit in the integers *x* and *y*, respectively. Notice that the index-*i* runs from right to left for each 3-bit block. As an example how to calculate the integers *xᵢ*, one takes the q-monomial ${a}_{3}^{†} {a}_{2} {a}_{2}^{†} {a}_{1}$, which corresponds to the integer 101 011 001. Then *x₁* = 001 001 001, *x₂* = 000 001 000 and *x₃* = 001 000 000.

The discriminant Δ has the following information, when Δ = 1 the product *xy* is null, otherwise ***z*** is well defined and it is given by $z = {z}_{1} ∨ \left({z}_{2}≪1\right) ∨ \left({z}_{3}≪2\right) ,$ where *z*, are given by
*z*₁ = *x*₁ ∨ *y*₁,
*z*₂ = ((¬(*x*₂ ⊕ *y*₂) ∧ *x*₁ ∧ *y*₁) ∨ (*x*₂ ∧ *x*₁ ∧ ¬*y*₁) ∨ (*y*₂ ∧ ¬*x*₁ ∧ *y*₁)),
*z*₃ = ((*x*₁ ∧ *x*₃) ∧ (*y*₂ ∨ ¬*x*₂ ∨ *y*₃)) ∨ (*y*₁ ∧ *y*₃ ∧ ¬*x*₁) ∨ (*x*₁ ∧ *x*₂ ∧ ¬*y*₂ ∧ ((*x*₃ ∧ ¬*y*₁ ∧ ¬*y*₃) ∨ (¬*x*₃ ∧ *y*₁ ∧ *y*₃))).

Since these bitwise operators manipulate individuals bits within a bit array, this method can be applied to any bit length integer or even an array of integers (or an arbitrary qubit dimension). These operations are provided at CPU level and are therefore extremely fast.

### 5 CONCLUSION

Quantum computing has emerged as a multidisciplinary field combining computer science, physics, and mathematics, offering the potential to simulate quantum systems without the exponential overhead of classical simulations. Central to standard quantum computing is the concept of quantum circuits, composed of qubits and quantum gates, providing a common language among researchers from various fields to understand and develop quantum algorithms. Quantum algorithms exploit quantum mechanical features like superposition and entanglement, which have no classical analogs, making quantum system simulations particularly challenging. Nonetheless, certain classes of quantum circuits, such as Clifford circuits, have been demonstrated to be efficiently simulable on classical computers.

An important aspect of quantum simulation is the representation of the elements of a quantum computer. Algebraic constructions based on complex Clifford algebra [13] provide a potential unification of all components of a quantum circuit (such as qubits, gates, and the tensor product) into two concepts: algebraic elements and the geometric product. However, because the tensor product is commutative, a parity correction is necessary due to the fact that the geometric product is inherently non-Abelian.

In this paper, the algebra of hard-core bosons was explored in order to improve the tensor product representation originally formulated by the complex Clifford algebra [13]. This new approach realizes the tensor product without the need for parity corrections, since the new product is commutative for elements with different indices. It was also observed that multiqubit systems naturally aligns with the algebra of hard-core bosons, making this novel algebraic framework well-suited for quantum simulations. The Jordan-Wigner transformation was evoked in order to demonstrate the equivalence of two frameworks, the former based on complex Clifford algebras and the latter based on the algebra of the hard-core-bosons.

It was also shown in this paper how to simulate a quantum computing process and calculate the probabilities of the final state for a given algorithm. Thus, the knowledge of the final state allows the method to implement a statevector simulator. The methods presented in the paper strongly demonstrate the power of the algebraic approach, which relies on the presence of annihilation and creation operators, without the need for explicit determination of matrix elements, a process that grows exponentially with the number of qubits. Since the tensor product is realized more simply within this framework, it is expected to lead to more efficient computational tools (like the Quipo library [34]), thus enhancing the simulation of quantum systems.

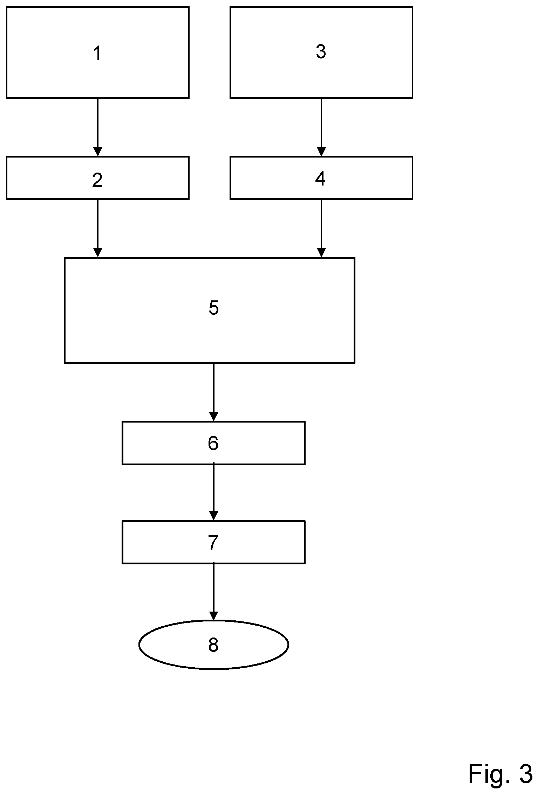

The invention can be implemented in software, that means with a conventional computer program, using the structure depicted in figure 3. In figure 3, in block 1 a software model of the quantum computing circuit to be simulated and/or compiled is provided as an input. The input data of block 1 are then converted in block 2 into a format which can be simulated and/or compiled by the conventional computer using algebraic steps which are based on the intrinsic property of the hard-core bosons.

Further, in a block 3 the task which is to be computed by the quantum computing circuit is provided as input data. The data of block 3 is converted in block 4 into format which can be simulated and/or compiled by the conventional computer. In block 5 the converted data of blocks 2 and 4 are then processed using the method of the invention, wherein the quantum computing task of block 3 is simulated and/or compiled on a simulated and/or compiled version of the quantum computing circuit of block 1 using algebraic steps which are based on the intrinsic properties of hard-core bosons for naturally simulating the statistical behavior of the real qubits, quantum gates and their interaction of the quantum computing circuit to be simulated and/or compiled.

When the procedure of block 5 is finished, results are provided in block 6. The results of block 6 are then reversely converted in block 7 into the output format of the real quantum computing circuit which is simulated/compiled. The output data are then output in block 8.

### REFERENCES

[1] R. P. Feynman, "Simulating physics with computers," Int. J. Theor. Phys., vol. 21, pp. 467-488, 1982.
[2] P. Benioff, "The computer as a physical system: A microscopic quantum mechanical hamiltonian model of computers as represented by turing machines," Journal of Statistical Physics, vol. 22, no. 5, pp. 563-591, 1980.
[3] Y. I. Manin, The computable and the non-computable (Vychislimoe i nevychislimoe). Kibernetika. Moskva: Sovetskoe RadioSovetskoe Radio, 1980, r. 0.45.
[4] D. E. Deutsch, "Quantum computational networks," Proceedings of the Royal Society of London. A. Mathematical and Physical Sciences, vol. 425, no. 1868, pp. 73-90, Sep. 1989.
[5] F. Arute, K. Arya, R. Babbush, and et al., "Quantum supremacy using a programmable supercon-ducting processor," Nature, vol. 574, pp. 505-510, 2019.
[6] A. Basermann, M. Epping, B. Fauseweh, M. Felderer, E. Lobe, M. Röhrig-Zöllner, G. Schmied-inghoff, P. K. Schuhmacher, Y. Setyawati, and A. Weinert, "Quantum Software Ecosystem Design," 5 2024.
[7] J. Preskill, "Quantum computing in the NISQ era and beyond," Quantum, vol. 2, p. 79, Aug 2018.
[8] A. Barenco, C. H. Bennett, R. Cleve, D. P. DiVincenzo, N. Margolus, P. Shor, T. Sleator, J. A. Smolin, and H. Weinfurter, "Elementary gates for quantum computation," Physical Review A, vol. 52, no. 5, pp. 3457-3467, 1995.
[9] S. Aaronson and D. Gottesman, "Improved simulation of stabilizer circuits," Phys. Rev. A, vol. 70, no. 5, p. 052328, 2004.
[10] D. Gottesman, "The heisenberg representation of quantum computers," in Proceedings of the 22nd International Colloquium on Group Theoretical Methods in Physics, 1998. [Online]. Available: https://arxiv.org/abs/quant-ph/9807006
[11] A. Cicero, M. A. Maleki, M. W. Azhar, A. F. Kockum, and P. Trancoso, "Simulation of quantum computers: Review and acceleration opportunities," 2024. [Online]. Available: https://arxiv.org/abs/2410.12660
[12] M. Epping, "Hybrid simplification rules for boundaries of quantum circuits," 6 2022.
[13] J. Hrdina, A. Navrat, and P. Vasik, "Quantum computing based on complex Clifford algebras," Quant. Inf. Proc., vol. 21, no. 9, p. 310, 2022.
[14] G. Biswas, "On Classical Simulation of Quantum Circuits Composed of Clifford Gates," Quanta, vol. 13, no. 1, pp. 20-27, 2024.
[15] G. Veyrac and Z. Toffano, "Geometric Algebra Jordan-Wigner Transformation for Quantum Simulation," Entropy, vol. 26, no. 5, p. 410, 2024.
[16] F. Brackx, H. De Schepper, and F. Sommen, "The Hermitian Clifford Analysis Toolbox," Adv. Appl. Clifford Algebras, vol. 18, no. 3-4, pp. 451-487, 2008.
[17] J. Hrdina, D. Hildenbrand, A. Návrat, C. Steinmetz, R. Alves, C. C. Lavor, P. Vašik, and I. Eryganov, "Quantum Register Algebra: the mathematical language for quantum computing," Quant. Inf. Proc., vol. 22, no. 9, p. 328, 2023.
[18] J. Hrdina, D. Hildenbrand, A. Návrat, C. Steinmetz, R. Alves, C. Lavor, P. Vašik, and I. Eryganov, "Quantum register algebra: the basic concepts," Lect. Notes Comput. Sci., vol. 13771, p. 112, 2023.
[19] P. A. M. Dirac, "Quantum theory of emission and absorption of radiation," Proc. Roy. Soc. Lond. A, vol. 114, p. 243, 1927.
[20] R. N. Mohapatra and B. Sakita, "SO(2n) Grand Unification in an SU(N) Basis," Phys. Rev. D, vol. 21, p. 1062, 1980.
[21] F. Wilczek and A. Zee, "Families from Spinors," Phys. Rev. D, vol. 25, p. 553, 1982.
[22] N. Cardoso, D. Emmanuel-Costa, N. Gonçalves, and C. Simoes, "SOSpin, a C++ library for Yukawa decomposition in SO(2N) models," Comput. Phys. Commun., vol. 203, pp. 178-200, 2016.
[23] T. Matsubara and H. Matsuda, "A lattice model of liquid helium, i," Progress of Theoretical Physics, vol. 16, no. 5, pp. 569-582, 1956.
[24] P. W. Anderson, "Absence of diffusion in certain random lattices," Physical Review, vol. 109, no. 5, pp. 1492-1505, 1958.
[25] D. Bonatsos, C. Daskaloyannis, and K. Kanakoglou, "Parafermionic and generalized parafermionic algebras," in International Workshop on Quantum Groups, Deformations and Contractions, 9 1999.
[26] L. A. Wu and D. A. Lidar, "Qubits as parafermions," J. Math. Phys., vol. 43, no. 9, pp. 4506-4525, 2002.
[27] P. Jordan and E. P. Wigner, "About the Pauli exclusion principle," Z. Phys., vol. 47, pp. 631-651, 1928.
[28] M. A. Nielsen and I. L. Chuang, Quantum Computation and Quantum Information: 10th Anniversary Edition. Cambridge University Press, 2010.
[29] N. D. Mermin, "Quantum mysteries revisited," American Journal of Physics, vol. 58, no. 8, pp. 731-734, Aug. 1990.
[30] D. M. Greenberger, M. A. Horne, and A. Zeilinger, "Going Beyond Bell's Theorem," Fundam. Theor. Phys., vol. 37, pp. 69-72, 1989.
[31] D. Bouwmeester, J.-W. Pan, M. Daniell, H. Weinfurter, and A. Zeilinger, "Observation of three photon Greenberger-Horne-Zeilinger entanglement," Phys. Rev. Lett., vol. 82, pp. 1345-1349, 1999.
[32] M. Epping, H. Kampermann, C. macchiavello, and D. Bruß, "Multi-partite entanglement can speed up quantum key distribution in networks," New J. Phys., vol. 19, no. 9, p. 093012, 2017.
[33] M. Epping, private communication, 2025.
[34] D. Emmanuel-Costa, T. Keitzl, and M. Röhrig-Zöllner, "Quipo, a C++ library for implementing hard-core bosons algebra," 2025, under development, Institute of Software Technology, German Aerospace Center (DLR), Cologne, Germany.
[35] N. Quetschlich, L. Burgholzer, and R. Wille, "MQT Bench: Benchmarking Software and Design Automation Tools for Quantum Computing," Quantum, 2023, MQT Bench is available at https: //www.cda.cit.tum.de/matbench/.
[36] A. W. Cross, L. S. Bishop, J. A. Smolin, and J. M. Gambetta, "Open Quantum Assembly Language," 7 2017.
[37] A. Javadi-Abhari, M. Treinish, K. Krsulich, C. J. Wood, J. Lishman, J. Gacon, S. Martiel, P. D. Nation, L. S. Bishop, A. W. Cross, B. R. Johnson, and J. M. Gambetta, "Quantum computing with Qiskit," 2024.

## Claims

1. Method for simulating and/or compiling a quantum computing circuit comprising at least one qubit, wherein the simulating and/or compiling is done by algebraic calculation steps executed on a computer with a conventional architecture which simulates the behavior of real qubits, **characterized in that** the algebraic steps use the intrinsic properties of hard-core bosons for naturally simulating the statistical behavior of real qubits, quantum gates and their interaction.

2. Method according to claim 1, **characterized in that** the method uses a mixed algebra based on hard-core bosons, where elements within the same indices anticommute and elements within the different indices commute.

3. Method according to any of the preceding claims, **characterized in that** both the annihilation and creation operators of the algebra simulating the qubits, quantum gates and their interaction are based on hard-core bosons.

4. Method according to any of the preceding claims, **characterized in that** the resulting state of a quantum gate is calculated by the algebraic steps using the intrinsic properties of hard-core bosons without the need for determination of any matrix elements for the operators involved.

5. Method according to any of the preceding claims, **characterized in that** the tensor product in multi-qubit systems is established based on the hard-core boson properties without the need of any sign or parity correction in the result.

6. Method according to any of the preceding claims, **characterized in that** the computational implementation of the algebraic steps which use the intrinsic properties of hard-core bosons is based on a subprocedure library covering the different qubit state changes.

7. Method according to any of the preceding claims, **characterized in that** in the computational implementation of the algebraic steps which use the intrinsic properties of hard-core bosons, the annihilation and creation operators are represented by a n-bit value in an array of bits, in particular within an integer variable, and at least some of the operations of the simulated quantum computing circuit using the annihilation and creation operators are performed by bitwise logical operations applied to the n-bit values by the computer executing the method

8. Method according to any of the preceding claims, **characterized in that** the state vector of the simulated quantum computing circuit is read out during and/or after the simulation.

9. Computer program for simulating and/or compiling a quantum computing circuit comprising at least one qubit, the computer program being stored on a computer-readable storage medium, and when the computer program is executed by a computer, the method according to any of the preceding claims is executed.

10. Computer with a conventional architecture, having a processor and a computer-readable storage medium, wherein a computer program according to claim 9 is stored in the computer-readable storage medium, wherein the processor is configured to execute the computer program.
